# EUROPEAN PATENT APPLICATION

(11) **EP 2 706 772 A1**
(43) Date of publication of application: **12.03.2014**
(21) Application number: 13182102.7
(22) Date of filing: 28.08.2013
(51) Int. Cl.: H04W 12/08, H04W 4/00, G06K 7/10, G06Q 30/02, H04L 29/06

(54) **Method to implement one time readability on nfc tags**

(30) Priority: 05.09.2012 US 201213603880
(71) Applicant: Agreeya Mobility Inc, Mountain View 94043 (US)
(72) Inventor: Gupta, Shishir, Milpitas, CA California 95035 (US); Iyengar, Raghu Sesha, 560010 Rajajinagar (IN)
(74) Representative: Gulde Hengelhaupt Ziebig & Schneider

(57) **Abstract**

The embodiments herein relate to Near Field Communication and, more particularly, to facilitating one time readability of tags for secured near field communication. A tag with one time readability enabled provides encrypted data to any reader that request for data. Only an authorized reader that possesses a proprietary application can decode received data. Once the data is decoded, the authorized reader marks the tag as read. Once the tag is marked as "read", it invalidates any further data access request from any reader. Further, the tag can be reused to write fresh data onto it.

## Description

### TECHNICAL FIELD

The embodiments herein relate to Near Field Communication and, more particularly, to facilitating one time readability of tags for secured near field communication.

### BACKGROUND

Near Field Communication (NFC) is a technology that helps to establish radio communication between NFC enabled devices by tapping the devices or else by bringing them to close proximity, say a few centimeters. NFC has various applications such as contactless transactions, data exchange, Radio Frequency Identification (RFID) tag scanning, mobile payments and so on. Further, NFC enabled handsets can be used to view real time travel information and to purchase transport tickets. Basic principle of NFC communication is magnetic induction. A reader emits a small electric current, which creates a magnetic field, which in turn bridges the physical space between the NFC enabled devices that try to exchange data. That field is received by a similar coil in the client device, where it is turned back into electrical impulses to communicate data such as identification number, status information, or any other information.

In an NFC system, the tags have multiple classification modes. One of them is based on power sources. Based on power source, the tag is classified as active or passive or battery assisted passive modes. A tag in active mode possess own power source, which may be a battery. A passive tag does not possess any power source and use energy from active power device (reader) to operate. The battery assisted active tag works similar to the passive tags, but have battery assistance to support longer reading distance and also help the tag to operate independently of the reader.

Another classification of the NFC tags is based on NFC Forum Type Tag Operation Specifications. In this perspective, NFC Forum classifies the NFC tags under four groups. They are Type 1, Type 2, Type 3 and Type 4 respectively. Further, each tag type may possess different read-write functionalities and properties. For example, Type 1 and 2 have read and re-write capabilities. Further, user can configure the tag to become read-only. Type 3 and 4 are pre-configured by manufacturer as either read and re-writable or read only. Further, each type of tag may be compatible with different products based on platform on which the product is built. Further, memory size of tags may vary based on the type of tag.

Disadvantage of existing NFC based communication systems is that a tag can be read several times by the many relevant application, however could be redeemed only once at the reader. This may result in bad customer experience. Especially when the tags are to be designed for one-time usage purposes such as coupon distribution or gift associated with the purchase. The retail field may require the NFC Tag to be used for many such one-time usage applications.

One of the existing methods for secured data transmission in NFC discloses a process of encrypting data stored in the NFC tags. In order to do this, the system maintain additional sections of data in a TLV message frame, which in turn is encrypted using any suitable encryption mechanism that is known to both reader and polling device. Disadvantage of this method is that the data security may still be compromised if any hacker knows the encryption mechanism.

### BRIEF DESCRIPTION OF THE FIGURES

The embodiments herein will be better understood from the following detailed description with reference to the drawings, in which:

FIG. 1 illustrates a general block diagram of NFC architecture, as disclosed in the embodiments herein;

FIG. 2 illustrates structure of NDEF data, as disclosed in the embodiments herein; and

FIG. 3 illustrates flow diagram, which shows various steps involved in the process of enabling one time readable tag mechanism, as disclosed in the embodiments herein.

### DETAILED DESCRIPTION OF EMBODIMENTS

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

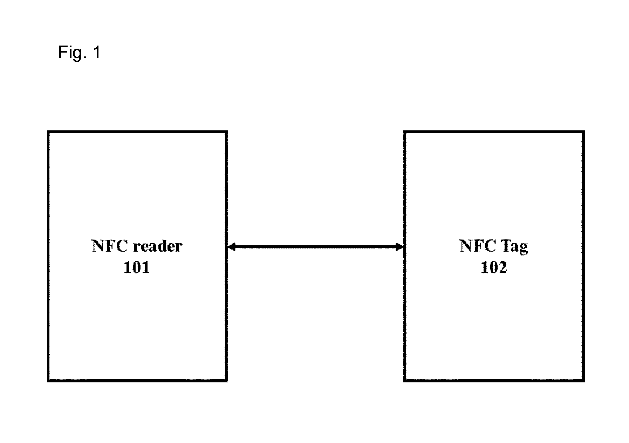

The embodiments herein disclose a process of implementing a One Time Readable NFC Tag by providing a mechanism thereof. Referring now to the drawings, and more particularly to FIGS. 1 through 3, where similar reference characters denote corresponding features consistently throughout the figures, there are shown embodiments.

FIG. 1 illustrates a general block diagram of NFC architecture, as disclosed in the embodiments herein. The system comprises a NFC reader (Reader) 101 and a NFC Tag 102. In an embodiment, the NFC system supports one time readability of data from the tag. The reader 101 may be a dedicated NFC Reader device or may be any device such as mobile phone, which is equipped with NFC facility. NFC tags can be used to store small amount of information, which can be transferred to active NFC device/devices. The tag 102 may be a passive tag and may power up by drawing power from an active device, which may be the reader 101. Further, the tag 102 transfers the information to the reader 101. In this mechanism, the information is stored in the tag 102 and is encrypted using any suitable encryption scheme. When a reader 101 requests for information, the tag 102 provides the information to the reader 101. The reader 101 may be able to decode the received information only if it is authorized to access the information. An authorized reader 101 may possess a proprietary application so as to decode and retrieve information from the data received from the tag 102. If the reader 101 is able to decode the received data, it may retrieve the information present in the received data. Further, the reader 101 marks the tag 102 as "read" or overwrites the tag data appropriately. The reader 101 may mark the tag as read by editing/setting value of a specific field in the message format to a pre-set value. Once the tag 102 is marked as "read", the reader 101 1 may also set value of another field in the message format to a predefined value. For example, the reader 101 may set value of a specific field to "zero" or else may write "invalid data" in the field. Once the value is set in the specific field, the tag 102 may not send original information i.e. the information sent to the authorized reader once, to any other reader 101 that requests for it.

The tag 102 may be a re-writable/re-usable such that once the tag is used and is marked as read, then the tag may be used to write fresh data to it, depending on the tag characteristic/type, with an appropriate application. Further, the tag 102 may also be able maintain information on number of data read attempts by readers 101 with authorized application, credentials of the readers 101 which tried to access information from the tag 102 and so on, which is written onto the tag 102 by the reader 101 during access attempt. This information may be stored in the tag 102 and may be accessible for the user in a suitable format.

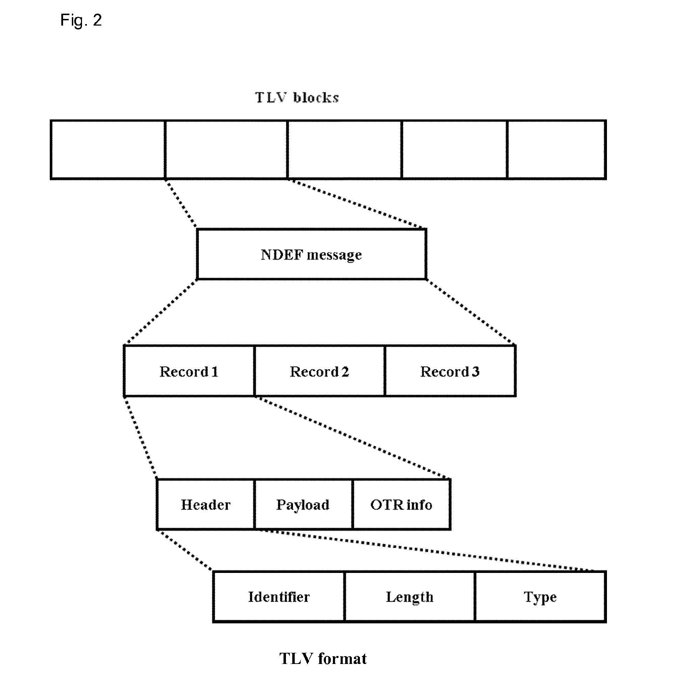

FIG. 2 illustrates message structure of TLV data, as disclosed in the embodiments herein. The Tag Length Value (TLV) may comprise the NFC data Exchange Format (NDEF) that is to be encoded and is to be transmitted to the reader 101. NDEF is a common data format for NFC devices. Further, the NDEF message may comprise multiple NDEF records. The TLV data may comprise flags that indicate the start and stop of data or a particular message. For example, a terminator TLV may indicate the last TLV block in the data area. Similarly, the first record in a NDEF message may be marked with a Message Begin flag and the last Record in the NDEF message may be marked with a Message End flag. Further, a record is a unit that carries payload within a NDEF message.

Further, each record contains payload information to be transmitted, along with corresponding header. In addition to payload and header information, the NDEF message comprises a dedicated OTR info field. The OTR (One Time Readable) field may further comprise a higher nibble and a lower nibble. The higher nibble information may refer to type of tag and the lower nibble information may refer to state of the tag. Here, type of tag information indicates whether the tag is enabled with one time readability or not and the state of tag indicates if the tag information has already been read or not. For example, higher nibble value 0001b in the OTR field may indicate that one time readability is enabled with the tag and a higher nibble value 0000b in the OTR field may indicate that one time readability is not enabled with the tag. Similarly, a lower nibble value 0001b in the OTR field may indicate that the tag is unread and a lower nibble value 0000b in the OTR field may indicate that the tag is already read.

The header field in each of the record block further comprises three fields namely "identifier", "length" and "type". Value in the field "length" indicates length of the payload that is encapsulated in that particular record. The payload length value may vary depending on length/size of the payload. For example, payload length may be one octet for short records and may be four octets for normal records. The field "type" indicates type of data being carried in payload of that record. This information may be used by the receiving application to decide processing mechanism to be adapted corresponding to the type of data. Further, type of first record data represent the type of whole NDEF message and hence, may provide processing context for the whole message. Further, information in the "identifier" field may be optional information and may allow the user application (s) to identify payload carried within any specific NDEF record. Payload identifier may act as reference to specific records.

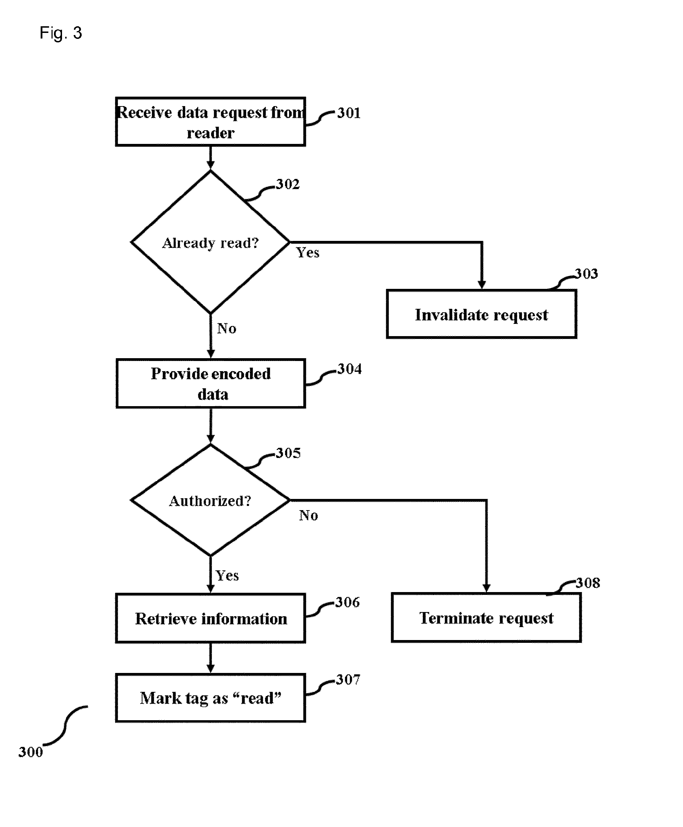

FIG. 3 illustrates flow diagram, which shows various steps involved in the process of enabling one time readable tag mechanism, as disclosed in the embodiments herein. When one time readability is enabled with a particular tag 102, information from that tag 102 may be retrieved by one authorized reader 101 only once, after which the tag 102 invalidates any further read cycles. In an embodiment, an authorized reader is a reader that possesses a proprietary application to decode data received from the tag 102.

When the tag 102 receive (301) data request from a reader 101, it checks (302) if data has already been read. The tag 102 may check if data is already been read or not by checking value of a specific field (OTR info) in the NDEF message header. In an embodiment, once the data is provided to an authorized reader 101 and the tag is marked as "read" by the authorized reader 101, the tag 102 invalidates (303) any further data request from any reader 101 i.e. the tag 102 may not provide original information to any other reader 101 that requests for it. If the tag 102 is not marked as "read", then the tag 102 provides (304) data present in the tag 102 to the reader 101 which made the data request.

In an embodiment, the data in the tag 102 may be encoded using a suitable encoding scheme and only authorized readers 101 i.e. readers that possess the required proprietary application may be able to decode and retrieve information from the received encoded data. If the reader 101 is authorized, the reader 101 retrieves (306) the information by decoding the received encoded information. Once the information is retrieved, the reader 101 marks (307) the tag 102 as "Read". In one embodiment, the tag 102 may be marked "read" by editing/setting a particular field in the message format stored in the tag 102 to a pre-determined format or to a pre-determined value by the reader 101. In another embodiment, the field that indicates whether the tag is already read may be a flag, which may be accordingly set by the reader 101. Further, a tag that is marked as "read" may not provide information to any reader 101 and may invalidate (303) any further data access request from any reader 101.

If the reader 101 is not authorized i.e. if the reader 101 does not possess the proprietary application, it may not be able to retrieve information by decoding the received encoded data. In this case, the reader 101 terminates (308) the data request.

In an embodiment, an authorized reader 101 may be able to track information on how many times a particular tag 102 was tried to be read by checking certain information that is written on the tag 102 by the reader 101 that attempts data access. Each authorized reader 101 that attempts data access may write its fingerprint on the tag 102. The fingerprint of the reader 101 may refer to any unique Id associated with the reader 101 such as IMEI number of a mobile device and so on, along with other information such as date, time and so on. Further, this information may be used to check details of the readers that attempted to access information stored in the tag 102.

In another embodiment, an authorized reader 101 may be able to track information on how many times a particular tag 102 was tried to be read, using a counter mechanism. In this process, once the information stored in the tag 102 is read by an authorized reader 101 and the tag 102 is marked as "read", a counter is started. Further, for each access attempt by any authorized reader 101, the counter value is updated. This counter value may be checked by any authorized reader 101 to identify number of data access attempts made on that tag 102.

The various actions in method 300 may be performed in the order presented, in a different order or simultaneously. Further, in some embodiments, some actions listed in FIG. 3 may be omitted.

The embodiments disclosed herein can be implemented through at least one software program running on at least one hardware device and performing network management functions to control the network elements. The network elements shown in Fig. 2 include blocks, which can be at least one of a hardware device, or a combination of hardware device and software module.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the spirit and scope of the claims as described herein.

## Claims

1. A method for communicating with a Near Field Communication (NFC) tag, said method comprising of
checking if data present in said NFC tag has been read, on said tag receiving a data request from an authorized NFC reader;
providing said data to said NFC reader by said NFC tag, if data present in said NFC tag has not been read; and
setting status of said NFC tag to read by said NFC reader, on said NFC reader decoding said data; wherein said status indicates that said NFC tag may not be read again.

2. The method, as claimed in claim 1, wherein said NFC tag checks if said NFC tag has been read by checking value present in a One Time Readable (OTR) field in said data, when said data is attempted to be read.

3. The method, as claimed in claim 1, wherein said NFC tag checks if said NFC tag has been read by checking status of a flag in said data.

4. The method, as claimed in claim 1, wherein setting status of said NFC tag to read by said NFC reader comprises of setting said One Time Readable (OTR) field in said data in said NFC tag to a pre-determined value.

5. The method, as claimed in claim 1, wherein setting status of said NFC tag to read by said NFC reader comprises of setting said flag in said NFC tag.

6. The method, as claimed in claim 1, wherein said method further comprises of said NFC tag not providing data to NFC readers, if status of said NFC tag is set to read.

7. The method, as claimed in claim 1, wherein said method further comprises of said NFC tag recording a fingerprint of NFC readers making data requests to said NFC tag.

8. The method, as claimed in claim 1, wherein said method further comprises of said NFC tag tracking number of times said NFC tag was attempted to be read.

9. A Near Field Communication (NFC) tag configured for
checking if data present in said NFC tag has been read, on said tag receiving a data request from a NFC reader;
providing said data to said NFC reader by said NFC tag, if data present in said NFC tag has not been read; and
setting status of said NFC tag to read, on receiving an indication from said NFC reader; wherein said status indicates that said NFC tag may not be read again.

10. The NFC tag, as claimed in claim 9, wherein said NFC tag is configured for checking if said NFC tag has been read by checking value present in a One Time Readable (OTR) field in said data.

11. The NFC tag, as claimed in claim 9, wherein said NFC tag is configured for checking if said NFC tag has been read by checking status of a flag in said data.

12. The NFC tag, as claimed in claim 9, wherein said NFC tag is configured for setting status to read comprises of setting said One Time Readable (OTR) field in said data in said NFC tag to a pre-determined value.

13. The NFC tag, as claimed in claim 9, wherein said NFC tag is configured for setting status to read comprises of setting said flag in said NFC tag.

14. The NFC tag, as claimed in claim 9, wherein said NFC tag is configured for not providing data to NFC readers, if status of said NFC tag is set to read.

15. The NFC tag, as claimed in claim 9, wherein said NFC tag is configured for recording a fingerprint of NFC readers making data requests to said NFC tag.

16. The NFC tag, as claimed in claim 9, wherein said NFC tag is configured for tracking number of times said NFC tag was attempted to be read by said NFC reader.
